# EUROPEAN PATENT APPLICATION

(11) **EP 4 571 948 A1**
(43) Date of publication of application: **18.06.2025**
(21) Application number: 24179536.8
(22) Date of filing: 03.06.2024
(51) Int. Cl.: H01M 50/103, H01M 50/342, H01M 50/682

(54) **BATTERY CELL AND BATTERY MODULE INCLUDING THE SAME**

(30) Priority: 15.12.2023 KR 20230183137
(71) Applicant: Samsung SDI Co., Ltd., Yongin-si, Gyeonggi-do 17084 (KR)
(72) Inventor: Yoo, Sang Hoon, 16678 Suwon-si, Gyeonggi-do (KR)
(74) Representative: Gulde & Partner

(57) **Abstract**

The present disclosure relates to a battery cell (200) and is directed to providing a battery cell (200) of which sudden malfunction is prevented and a lifetime is extended, and a battery module including the same. A battery cell (200) according to the present disclosure includes a case (210) which accommodates an electrode assembly (10), a cap plate (220) which is disposed on the case (210) and seals the case (210), a vent member (230) which is provided in the cap plate (220) and communicates with an inside of the case (210), and an electrolyte accommodation member (240) which is disposed in the case (210), communicates with the vent member (230), accommodates an electrolyte (242), and is ruptured when an internal pressure of the case (210) is greater than a first pressure value.

## Description

### BACKGROUND

### 1. Field of the Invention

The present disclosure relates to a battery cell and a battery module including the same.

### 2. Description of Related Art

A secondary battery is a battery that can be charged and discharged, unlike a primary battery that cannot be recharged. Low-capacity secondary batteries may be used in small portable electronic devices such as smartphones, feature phones, notebook computers, digital cameras, and camcorders, and high-capacity secondary batteries are widely used as driving power sources and power storage batteries for motors in hybrid and electric vehicles, for example. Such a secondary battery includes an electrode assembly provided with a positive electrode and a negative electrode, a case for accommodating the electrode assembly, electrode terminals connected to the electrode assembly, and the like.

The above information disclosed in this Background section is provided for enhancement of understanding of the background of the present disclosure, and, therefore, it may contain information that does not constitute related (or prior) art.

### SUMMARY OF THE INVENTION

The present disclosure is directed to providing a battery cell of which a sudden malfunction is prevented and a lifetime is extended, and a battery module including the same.

These and other aspects and features of the present disclosure will be described in or will be apparent from the following description of some embodiments of the present disclosure.

According to an aspect of the present disclosure, there is provided a battery cell including a case which accommodates an electrode assembly, a cap plate which is disposed on the case and seals the case, a vent member which is provided in the cap plate and communicates with an inside of the case, and an electrolyte accommodation member which is disposed in the case, communicates with the vent member, accommodates an electrolyte, and is ruptured when an internal pressure of the case is greater than a first pressure value.

The battery cell may further include a blocking member seated on the cap plate and disposed to cover the vent member.

When the internal pressure of the case is greater than a second pressure value, the blocking member may be ruptured so that a ruptured hole is formed in the blocking member.

The second pressure value may be greater than the first pressure value.

The battery cell may include a sealing member which is disposed in the vent member and moves to allow communication between the vent member and the inside of the case by an increase in the internal pressure of the case.

The blocking member may be disposed in contact with the sealing member to press the sealing member toward the inside of the case.

The vent member may include a vent hole which is formed in (e.g., extends through) a lower surface of the cap plate, communicates with the inside of the case, and has a first diameter and an inclined vent portion which is disposed in (e.g., extends through) an upper surface of the cap plate, has a second diameter greater than the first diameter, and is obliquely formed toward the vent hole.

The vent member may include a vent gasket which is disposed between the vent hole and the inclined vent portion, and on which the sealing member is seated.

The sealing member may allow the vent hole to communicate with the inclined vent portion when a difference between an internal pressure of the vent hole and an internal pressure of the inclined vent portion is greater than a certain value (e.g., a predetermined value) and block the vent hole from the inclined vent portion when the difference between the internal pressure of the vent hole and the internal pressure of the inclined vent portion is smaller (less) than or equal to the certain value.

A shape of the sealing member may be a spherical shape.

The electrolyte accommodation member may be disposed to block the inside of the case from the vent member.

The electrolyte accommodation member may include an electrolyte accommodation membrane which is in contact with the electrolyte and moves toward the cap plate when the internal pressure of the case is greater than atmospheric pressure.

The electrolyte accommodation member may include a protrusion which ruptures the electrolyte accommodation membrane which moves according to the internal pressure of the case.

The protrusion may be disposed on a lower surface of the cap plate, formed as a sting protruding toward the electrolyte accommodation membrane, and rupture the moving electrolyte accommodation membrane so that the electrolyte accommodated in the electrolyte accommodation membrane may fall.

The electrolyte accommodation member may include a guide member which guides the electrolyte accommodation membrane to move toward the cap plate.

The electrolyte accommodation member may include an electrolyte pouch which surrounds the electrolyte and may be formed of an elastic material.

According to another aspect of the present disclosure, there is provided a battery module including a housing and a plurality of battery cells disposed in the housing, wherein a battery cell of the plurality of battery cells includes a case which accommodates an electrode assembly, a cap plate which is disposed on the case and seals the case, a vent member which is provided in the cap plate and communicates with an inside of the case, and an electrolyte accommodation member which is disposed in the case, communicates with the vent member, accommodates an electrolyte, and is ruptured when an internal pressure of the case is greater than a first pressure value.

The battery cell may further include a blocking member seated on the cap plate and disposed to cover the vent member.

When the internal pressure of the case is greater than a second pressure value, the blocking member may be ruptured so that a ruptured hole may be formed in the blocking member.

According to the present disclosure, since an electrolyte is automatically replenished in a battery cell, a lifetime of the battery cell can be extended.

According to the present disclosure, since a gas in a battery cell can be discharged to the outside of the battery cell, the safety of the battery cell can be improved.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
FIG. 1 is a schematic exploded perspective view illustrating a configuration of a battery module according to an embodiment of the present disclosure;
FIG. 2 is a schematic plan view illustrating the configuration of the battery module according to an embodiment of the present disclosure;
FIG. 3 is a schematic cross-sectional view illustrating the configuration of the battery module according to an embodiment of the present disclosure;
FIG. 4 is a schematic perspective view illustrating a configuration of a battery cell according to an embodiment of the present disclosure;
FIG. 5 is a schematic exploded perspective view illustrating the configuration of the battery cell according to an embodiment of the present disclosure;
FIG. 6 is a cross-sectional view along line A-A' of FIG. 4;
FIG. 7 is a schematic perspective view illustrating a cap plate according to an embodiment of the present disclosure;
FIG. 8 is a schematic cross-sectional view illustrating a cap plate, a vent member, and an electrolyte accommodation member according to an embodiment of the present disclosure;
FIG. 9 is a schematic cross-sectional view illustrating a process in which the electrolyte accommodation member moves;
FIG. 10 is a schematic cross-sectional view illustrating a process in which the electrolyte accommodation member is ruptured;
FIG. 11 is a cross-sectional view illustrating a shape after the electrolyte accommodation member is ruptured;
FIG. 12 is a schematic cross-sectional view illustrating a cap plate, a vent member, and an electrolyte accommodation member according to another embodiment of the present disclosure;
FIG. 13 is a schematic cross-sectional view illustrating a process in which the electrolyte accommodation member moves;
FIG. 14 is a cross-sectional view illustrating a shape after the electrolyte accommodation member is ruptured;
FIG. 15 is a schematic cross-sectional view illustrating a cap plate, a vent member, and an electrolyte accommodation member according to another embodiment of the present disclosure;
FIG. 16 is a schematic cross-sectional view illustrating a process in which the electrolyte accommodation member moves;
FIG. 17 is a cross-sectional view illustrating a shape after the electrolyte accommodation member is ruptured;
FIG. 18 is a schematic cross-sectional view illustrating a cap plate, a vent member, and an electrolyte accommodation member according to yet another embodiment of the present disclosure;
FIG. 19 is a schematic cross-sectional view illustrating a process in which the electrolyte accommodation member moves;
FIG. 20 is a schematic cross-sectional view illustrating a process in which the electrolyte accommodation member is ruptured; and
FIG. 21 is a cross-sectional view illustrating a shape after the electrolyte accommodation member is ruptured.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

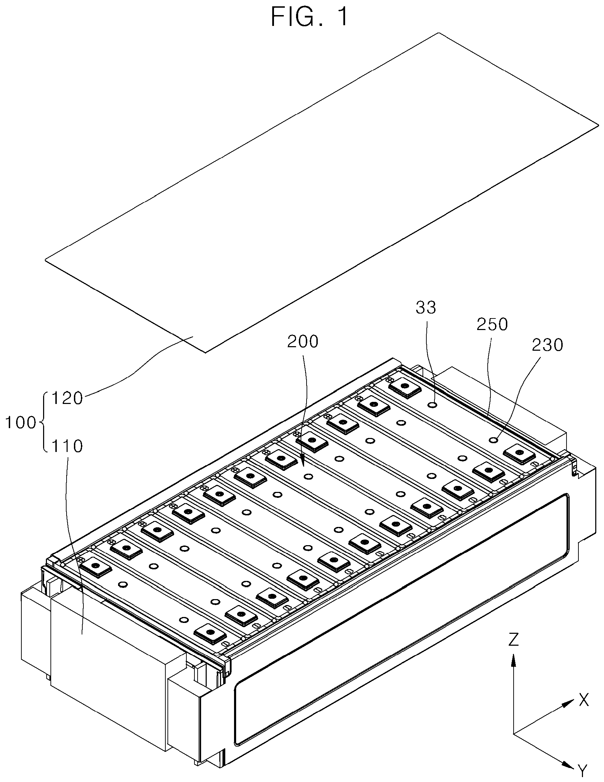

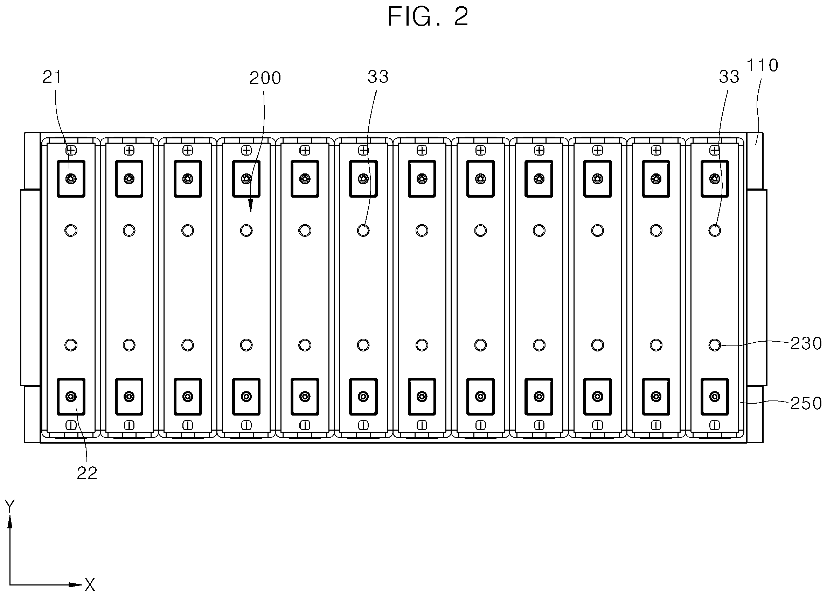

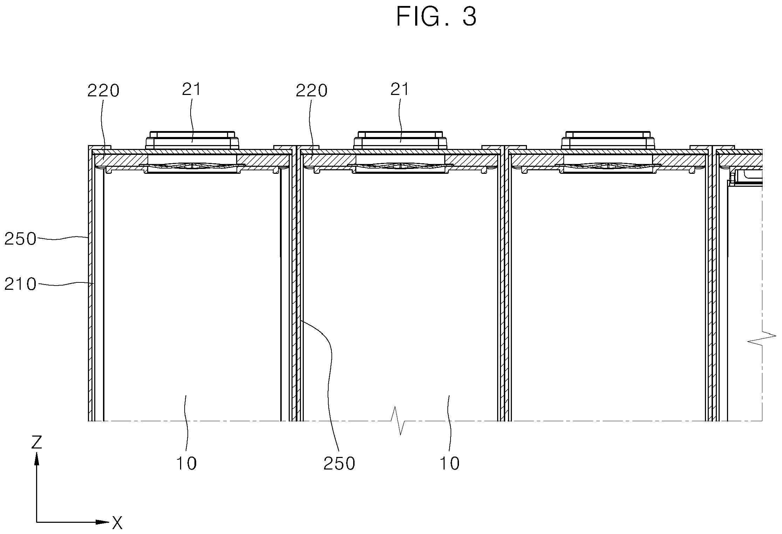

FIG. 1 is a schematic exploded perspective view illustrating a configuration of a battery module according to an embodiment of the present disclosure, FIG. 2 is a schematic plan view illustrating the configuration of the battery module according to an embodiment of the present disclosure, and FIG. 3 is a schematic cross-sectional view illustrating the configuration of the battery module according to an embodiment of the present disclosure.

Referring to FIGS. 1 to 3, a battery module according to the present embodiment includes a housing 100 and battery cells 200.

The housing 100 may form an overall exterior of the battery module and may function as a component for supporting (e.g., entirely supporting) the battery cells 200 to be described below.

The housing 100 may include a housing body 110 and a housing cover 120

The housing body 110 may be formed in a box shape with a hollow interior and an open upper side. A shape of a cross-section of the housing body 110 may be variously designed and changed other than a quadrangular shape illustrated in FIG. 1.

The housing cover 120 may open or close an inside space of the housing body 110. The housing cover 120 may be formed in a substantially plate shape and disposed to face an open upper surface of the housing body 110. The housing cover 120 may be detachably coupled to the housing body 110 by any of various coupling methods such as bolting, insertion-coupling, and other suitable methods.

The battery cell 200 may function as a unit structure for storing and supplying power in the battery module.

The battery cell 200 may be provided as the plurality of battery cells 200. The plurality of battery cells 200 may be disposed in the housing 100. The plurality of battery cells 200 may be arranged in the housing 100 in a first direction. In this case, the first direction may be a direction parallel to an X-axis in FIG. 1. The number of the battery cells 200 is not limited to that illustrated in FIG. 1 and may be variously designed and changed according to a size and the like of the battery module.

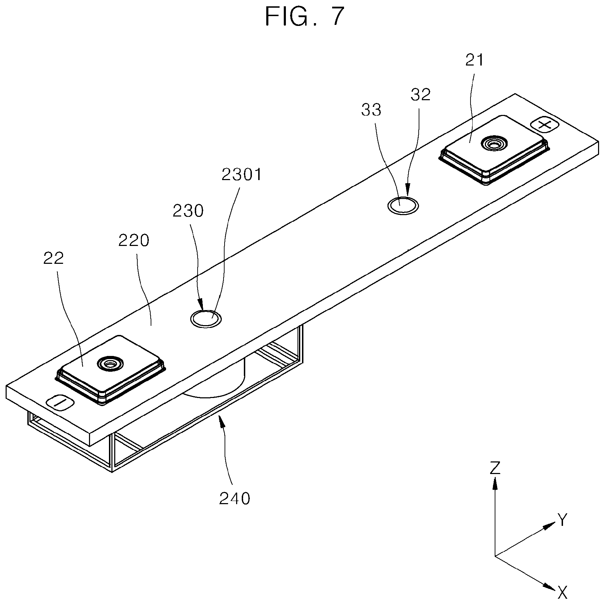

The battery cell 200 may include an electrolyte injection hole (for example, an electrolyte injection hole 32 of FIG. 7) for injecting an electrolyte, a sealing cap (for example, a sealing cap 33 of FIG. 7) for sealing the electrolyte injection hole 32, and a vent member (for example, a vent member 230 of FIG. 7) for discharging a gas in the battery cell 200 to the outside. The electrolyte injection hole 32, the sealing cap 33, and the vent member 230 will be described below together with a description of FIG. 7.

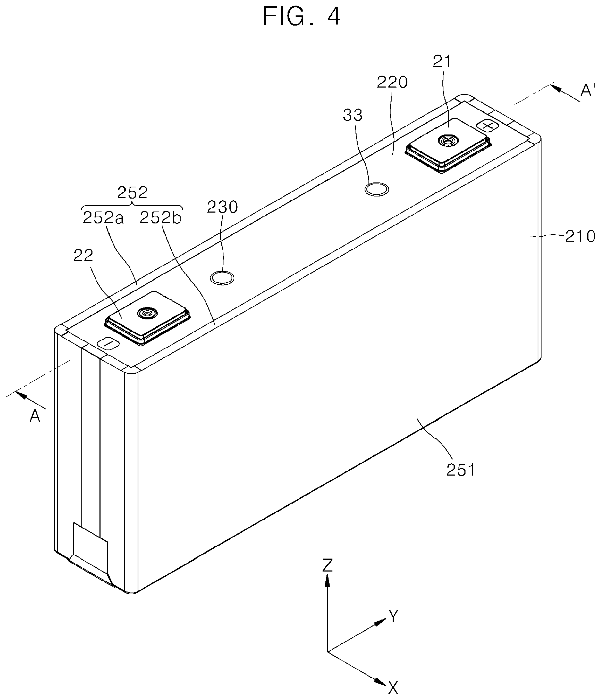

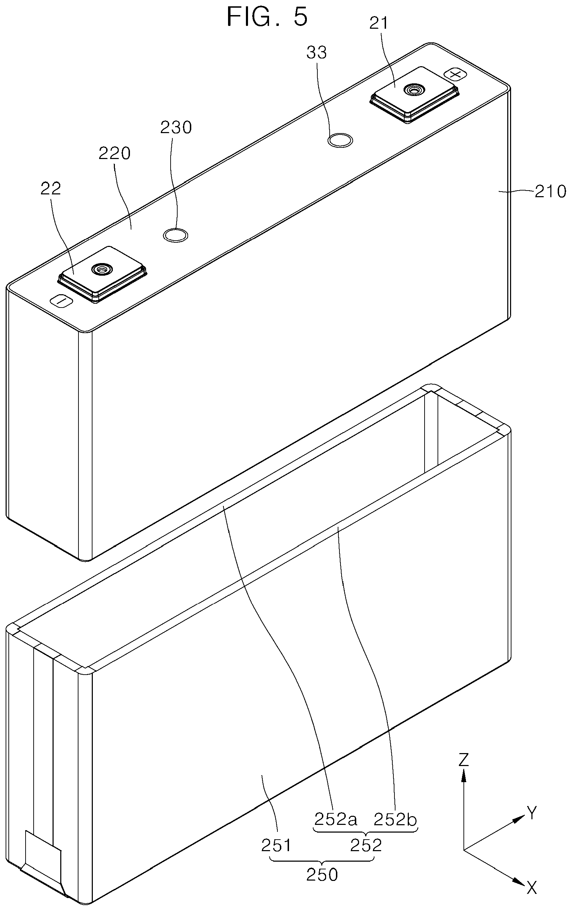

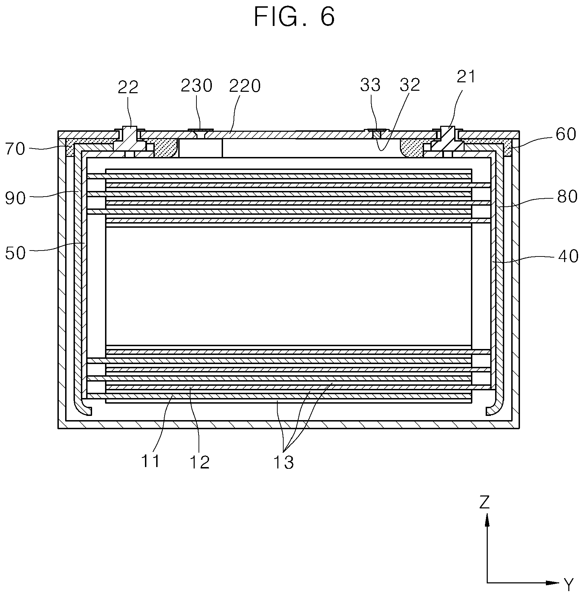

FIG. 4 is a schematic perspective view illustrating a configuration of a battery cell according to an embodiment of the present disclosure, FIG. 5 is a schematic exploded perspective view illustrating the configuration of the battery cell according to an embodiment of the present disclosure, and FIG. 6 is a cross-sectional view along line A-A' of FIG. 4.

Components illustrated in FIGS. 4 to 6 may be the same as or similar to those illustrated in FIGS. 1 to 3. Accordingly, descriptions of the same components may be omitted.

Referring to FIGS. 4 to 6, the battery cell 200 may include a case 210, a cap plate 220, a vent member 230, a blocking member 2301, and a fixing member 250.

Hereinafter, an example in which the battery cell 200 is a prismatic lithium-ion secondary battery will be described. However, the present disclosure is not limited thereto, and the battery cell 200 may be a lithium polymer battery or cylindrical battery, for example.

The case 210 may form an overall exterior of the battery cell 200. The case 210 may be formed in a can shape with a hollow interior and an open upper side. The case 210 may be formed of a conductive metal, such as aluminum, an aluminum alloy, or nickel-plated steel.

At least one electrode assembly 10 formed by winding a positive electrode 11, a negative electrode 12, and a separator 13 that is an insulator and interposed between the positive electrode 11 and the negative electrode 12 may be accommodated in the case 210. However, the present disclosure is not limited thereto, and the electrode assembly 10 may be formed, for example, as a structure in which the positive electrode 11 and the negative electrode 12 formed of a plurality of sheets are alternately stacked with the separator 13 interposed therebetween.

A current collector formed of a thin metal foil in each of the positive electrode 11 and the negative electrode 12 may include a coating portion that is a region coated with an active material and a non-coating portion that is a region uncoated with an active material.

The cap plate 220 may be disposed on the case 210 and may seal the case 210. The cap plate 220 may be formed in a substantially plate shape and disposed to face an open side of the case 210, that is, an upper surface of the case 210. The cap plate 220 may be fixed to an upper end portion of the case 210 by one of various coupling methods such as welding, bolting, and other suitable methods. Accordingly, an inside space of the case 210 may be sealed by an inner surface of the case 210 and an inner surface of the cap plate 220. Like the case 210, the cap plate 220 may be formed of a conductive material such as aluminum, an aluminum alloy, or nickel-plated steel.

A positive terminal 21 electrically connected to the positive electrode 11 of the electrode assembly 10 and a negative terminal 22 electrically connected to the negative electrode 12 thereof may be formed on the cap plate 220. The positive terminal 21 and the negative terminal 22 may be installed to pass through the cap plate 220 and protrude upward from the cap plate 220. The positive terminal 21 and the negative terminal 22 may be disposed to be spaced apart from each other in a second direction intersecting a first direction. In this case, the second direction may be a direction parallel to a Y-axis in FIG. 1.

Threading may be performed on outer circumferential surfaces of upper columns of the positive terminal 21 and the negative terminal 22 protruding outward from the cap plate 220, which may be fixed to the cap plate 220 by nuts. However, the present disclosure is not limited thereto, and the positive terminal 21 and the negative terminal 22 may be formed in rivet structures to be rivet-coupled or welded to the cap plate 220, for example.

The positive terminal 21 and the negative terminal 22 may be electrically connected to a current collector including positive and negative current collectors welded to a positive non-coating portion or a negative non-coating portion.

For example, the positive terminal 21 and the negative terminal 22 may be welded to the positive and negative current collectors. However, the present disclosure is not limited thereto, and the positive terminal 21, the negative terminal 22, and the positive and negative current collectors may be integrally formed to be coupled to each other.

In addition, an insulating member may be installed between the electrode assembly 10 and the cap plate 220. In this case, the insulating member may include first and second lower insulating members 60 and 70, and each of the first and second lower insulating members 60 and 70 may be installed between the electrode assembly 10 and the cap plate 220.

In addition, according to the present embodiment, one end of a separation member, which may be installed to face one side of the electrode assembly 10, may be installed between the insulating member and the positive terminal 21 and the negative terminal 22.

In this case, the separation member may include first and second separation members 80 and 90.

Accordingly, ends of the first and second separation members 80 and 90, which may be installed to face a side of the electrode assembly 10 may be installed between the first and second lower insulating members 60 and 70 and the positive terminal 21 and the negative terminal 22.

Therefore, the positive terminal 21 and the negative terminal 22 welded to the positive and negative current collectors can be coupled to ends of the first and second lower insulating members 60 and 70 and the first and second separation members 80 and 90.

In addition, an electrolyte injection hole 32 in which a sealing cap 33 may be installed may be formed in the cap plate 220.

The vent member 230 may be provided in the cap plate 220 and opened or closed according to a change in internal pressure of the case 210. That is, when the electrode assembly 10 operates normally, the vent member 230 may maintain a closed state to seal the case 210. As an internal pressure of the case 210 is increased to a certain pressure (e.g., a preset magnitude) or more, due to the generation of gas, overcharging, or fire caused by aging of the battery cell 200, the vent member 230 may be opened to discharge flames and emissions such gases from the inside to the outside of the case 210.

The vent member 230 may be disposed between the positive terminal 21 and the negative terminal 22 in the cap plate 220. A thickness of the vent member 230 may be smaller than a thickness of the cap plate 220. A notch or the like for inducing a rupture of the vent member 230 in an increase in internal pressure of the case 210 may be formed in the vent member 230.

The blocking member 2301 may be seated on the cap plate 220 and disposed to face the vent member 230. When a thermal runaway of the battery cell 200 occurs, the blocking member 2301 may function as a component for preventing a sequential thermal runaway of battery cells 200 by blocking heat from being transferred to the adjacent battery cell 200 and blocking flames or gases from being introduced into the vent member 230 of the adjacent battery cell 200.

According to an example, the blocking member 2301 may be implemented in the form of a mesh membrane. The blocking member 2301 implemented in the form of the mesh membrane may discharge gases in the battery cell to the outside and prevent external foreign matter from penetrating into the battery cell.

The blocking member 2301 may be individually installed in each battery cell 200, and the blocking members 2301 may be separated from each other. Accordingly, when a thermal runaway of any one battery cell 200 occurs, the blocking member 2301 installed in the corresponding battery cell 200 may be separated from the cap plate 220 independently of the blocking members 2301 installed in the other battery cells 200, and degradation of thermal blocking performance of the other battery cells 200 can be prevented.

The blocking member 2301 may be formed in a sheet shape having a substantially quadrangular or circular cross section. The blocking member 2301 may be seated on an upper surface of the cap plate 220 at a location at which the blocking member 2301 is disposed to vertically face the vent member 230. An area of the blocking member 2301 may be greater than an area of the vent member 230.

The fixing member 250 may be disposed to surround the case 210 and the cap plate 220 and may fix the blocking member 2301 to the cap plate 220. That is, the fixing member 250 may function as a component for protecting the case 210 from an external impact, foreign matter, and the like and fixing the blocking member 2301 to the cap plate 220 during a manufacturing process of the battery cell 200. Accordingly, the blocking member 2301 may be stably fixed to the cap plate 220 even without an additional process of attaching a double-sided tape and an additional structure.

The fixing member 250 may be formed in a thin sheet shape in which an inner surface is coated with an adhesive material. The fixing member 250 may include a synthetic resin material such as polyethylene terephthalate (PET), polybutylene terephthalate (PBT), or polypropylene (PP).

The fixing member 250 may include a first fixing member 251 and a second fixing member 252.

The first fixing member 251 may form an exterior of a side of the fixing member 250 and may be disposed to surround the case 210. Like the case 210, the first fixing member 251 may be formed in a shape with a hollow interior and an open upper side. An inner surface of the first fixing member 251 may be disposed around (e.g., to entirely surround) a circumferential surface of the case 210 excluding the open side of the case 210. The inner surface of the first fixing member 251 may be fixedly attached to an outer surface of the case 210 by an adhesive material with which the inner surface is coated.

The second fixing member 252 may form an exterior of another side of the fixing member 250. The second fixing member 252 may be disposed to extend from the first fixing member 251 and surround the cap plate 220 and the blocking member 2301.

The second fixing member 252 may include a first extension portion 252a and a second extension portion 252b.

The first extension portion 252a may extend from a side of the first fixing member 251. In this case, a cross section of the first extension portion 252a and the first fixing member 251 may have a substantially "1" shape. An inner surface of the first extension portion 252a may be disposed around (e.g., to surround) an outer surface of the cap plate 220.

The second extension portion 252b may extend from one side of the first fixing member 251. In this case, a cross section of the second extension portion 252b and the first fixing member 251 may have a substantially "1" shape. An inner surface of the second extension portion 252b may be disposed around (e.g., to surround) the outer surface of the cap plate 220.

FIG. 7 is a schematic perspective view illustrating a cap plate according to an embodiment of the present disclosure.

Components illustrated in FIG. 7 may be the same as or similar to those illustrated in FIGS. 1 to 6. Accordingly, descriptions of the same components may be omitted.

An electrolyte injection hole 32 passing through a cap plate 220 may be formed in a cap plate 220. An electrolyte may be injected into a battery cell 200 through the electrolyte injection hole 32, and thus the battery cell 200 may function as a battery. The electrolyte injection hole 32 may be sealed by a sealing cap 33. The sealing cap 33 may prevent foreign matter from penetrating into the battery cell 200 through the electrolyte injection hole 32.

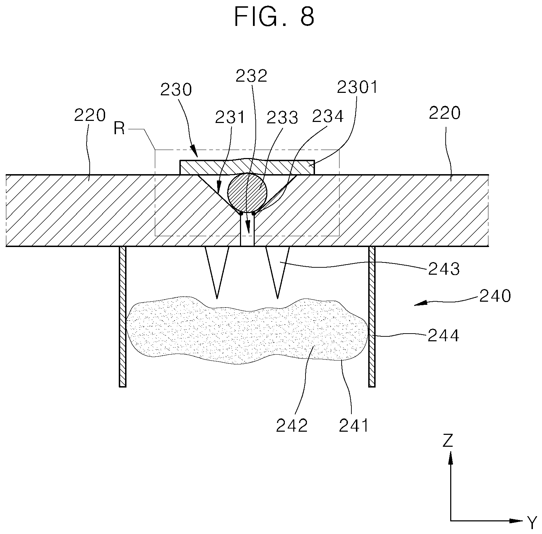

A vent member 230 may be formed in the cap plate 220. A gas in the battery cell 200 may be discharged to the outside through the vent member 230. A blocking member 2301 may be disposed on the vent member 230. The blocking member 2301 may be formed to be greater (e.g., in area) than the vent member 230 and disposed on the cap plate 220. As the vent member 230 and the blocking member 2301 are disposed at the cap plate 220, a gas in the battery cell 200 can be discharged to the outside through the vent member 230, and the blocking member 2301 can prevent foreign matter from penetrating into the vent member 230. A swelling phenomenon and explosion of the battery cell 200 can be prevented by the vent member 230. The details of the vent member 230 will be described below with reference to FIGS. 8 to 21.

An electrolyte accommodation member 240 may be disposed under the cap plate 220 (for example, in a -Z-axis direction). The electrolyte accommodation member 240 may accommodate an electrolyte (for example, an electrolyte 242 of FIG. 8). When the battery cell 200 ages, an internal electrolyte may evaporate, and the electrolyte may become insufficient. An electrolyte may be replenished in the battery cell 200 through the electrolyte accommodation member 240. As described above, as the electrolyte is replenished in the battery cell 200 by the electrolyte accommodation member 240, the sealing cap 33 may not need to be removed. In addition, since a user does not need to manipulate the sealing cap 33, the convenience for the user using the battery cell 200 can be improved. Details of the electrolyte accommodation member 240 will be described below with reference to FIGS. 8 to 17.

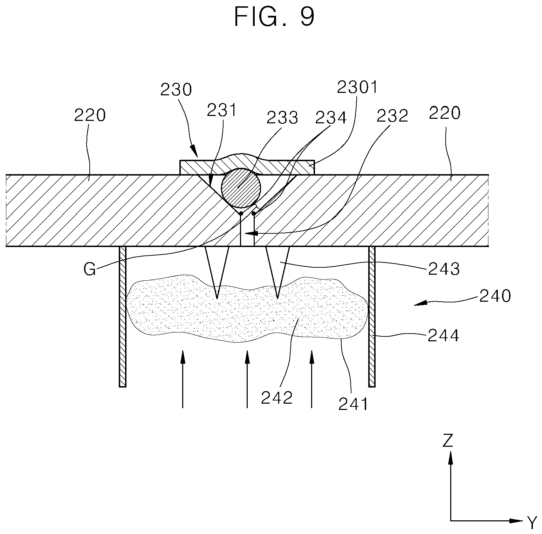

A vent member 230 illustrated in FIG. 8 may be the same as or similar to a vent member 230 illustrated in FIGS. 9 to 21. Accordingly, the vent member 230, an inclined vent portion 231, a vent hole 232, a sealing member 233, a vent gasket 234, an electrolyte accommodation member 240, an electrolyte accommodation membrane 241, an electrolyte 242, a protrusion 243, a guide member 244, a blocking member 2301, and a ruptured hole 2302 will be described with reference to FIG. 8,

A structure, in which the electrolyte 242 is automatically replenished in a battery cell 200 and an inner portion of the battery cell 200 and the outside of the battery cell 200 are automatically communicated with or blocked from each other, will be described with reference to FIGS. 8 to 21.

The electrolyte accommodation membrane 241 which accommodates the electrolyte 242 may move toward a cap plate 220 by a pressure difference between the vent member 230 and the inner portion of the battery cell 200. According to an example, the electrolyte accommodation membrane 241 may move toward the cap plate 220 in an upward direction (for example, in a +Z-axis direction).

The electrolyte accommodation membrane 241 of the electrolyte accommodation member 240 may be ruptured when an internal pressure of the battery cell 200 is greater than a certain pressure (e.g., a predetermined pressure) (for example, a first pressure value). When the internal pressure of the battery cell 200 is greater than a pressure (for example, the first pressure value) corresponding to a breaking strength of the electrolyte accommodation membrane 241, the electrolyte accommodation membrane 241 may be ruptured. Alternatively, the electrolyte accommodation membrane 241 may be ruptured by the protrusion 243 at a certain pressure (e.g., a predetermined pressure) (for example, the first pressure value). Alternatively, the electrolyte accommodation membrane 241 may come into contact with the protrusion 243 disposed on the cap plate 220 and may be ruptured by the protrusion 243. The protrusion 243 may be formed in the form of a sting or point of which an end is sharp. A sharp sting of the protrusion 243 may rupture the electrolyte accommodation membrane 241 of the electrolyte accommodation member 240.

When the electrolyte accommodation membrane 241 is ruptured, the electrolyte 242 accommodated in the electrolyte accommodation membrane 241 may be discharged to an outside of the electrolyte accommodation membrane 241. According to an example, the electrolyte 242 may be discharged to the outside of the electrolyte accommodation membrane 241 and may fall. As the electrolyte accommodation membrane 241 is ruptured, an internal pressure of the battery cell 200 may be directly transferred to the sealing member 233.

The inclined vent portion 231 may communicate with or be blocked from the vent hole 232 by the sealing member 233 disposed in the vent member 230 so as to adjust an internal pressure of the inclined vent portion 231. The sealing member 233 may be disposed in contact with the blocking member 2301 which covers the vent hole 232. The blocking member 2301 may be formed of an elastic material. Alternatively, the blocking member 2301 may be formed in the form of a mesh membrane. The sealing member 233 may be in contact with blocking member 2301, and the blocking member 2301 may restrict movement or a movement range of the sealing member 233. According to an example, when a force greater than or equal to a certain force (e.g., preset magnitude) acts on the sealing member 233, the sealing member 233 may overcome an elastic force acting on the blocking member 2301 and move. As a force greater than or equal to a certain force (e.g., a predetermined magnitude) acts on the sealing member 233, a gap G may be formed between the sealing member and the inclined vent portion 231, and thus the inclined vent portion 231 and the vent hole 232 may communicate with each other. When a magnitude of the force acting on the sealing member 233 decreases to a value smaller (less) than or equal to a certain force (e.g., a preset value), the sealing member 233 may be disposed on the vent gasket 234 due to the elastic force generated by the blocking member 2301. Accordingly, the communication between the inclined vent portion 231 and the vent hole 232 may be blocked. According to an example, when a pressure of the vent hole 232 is greater than a pressure of the inclined vent portion 231, the sealing member 233 may move away from the vent hole 232, the vent hole 232 and the inclined vent portion 231 may communicate with each other, and thus a pressure of the vent hole 232 and a pressure of the inclined vent portion 231 may be equal or similar to each other. When the pressure of the vent hole 232 and the pressure of the inclined vent portion 231 are equal or similar to each other, the sealing member 233 may move toward the vent hole 232 by the elastic force of the blocking member 2301 to block the vent hole 232 from the inclined vent portion 231.

When a use time of the battery cell 200 increases, the electrolyte in the battery cell 200 may evaporate, and thus a pressure of the battery cell 200 may increase. Accordingly, an internal pressure of the inclined vent portion 231 may increase gradually.

According to an example, when an internal pressure of the inclined vent portion 231 increases, the sealing member 233 may move, a gas may pass through the blocking member 2301 formed as a mesh membrane and may be discharged to the outside of the battery cell 200 through the blocking member 2301.

According to another example, when an internal pressure of the inclined vent portion 231 increases to reach a certain pressure (e.g., a predetermined pressure) (for example, a second pressure value) corresponding to a breaking strength of the blocking member 2301, a part of the blocking member 2301 may be ruptured and the ruptured hole 2302 may be formed in the blocking member 2301. The outside of the battery cell 200 and the inclined vent portion 231 may communicate with each other through the ruptured hole 2302. Accordingly, a pressure difference between an inner portion of the inclined vent portion 231 and the outside of the battery cell 200 may be reduced or removed. The ruptured hole 2302 may be formed smaller than the sealing member 233 so as not to allow the sealing member 233 to escape to the outside of the battery cell 200. Even when the ruptured hole 2302 is formed in the blocking member 2301, the sealing member 233 may move to the vent gasket 234 by the elastic force of the blocking member 2301. Alternatively, the sealing member 233 may move toward the vent gasket 234 due to a weight of the sealing member 233. Accordingly, the inner portion of the battery cell 200 and the outside of the battery cell 200 may be blocked from each other by the sealing member 233.

According to such a configuration, when a gas is generated in the battery cell 200 used for a long time and a pressure of the generated gas is increased, the electrolyte accommodation member 240 can be ruptured at a certain pressure (e.g., a predetermined pressure value) (for example, the first pressure value), the electrolyte 242 can be replenished in the battery cell 200, and foreign matter outside the battery cell 200 can be prevented from penetrating into the battery cell 200.

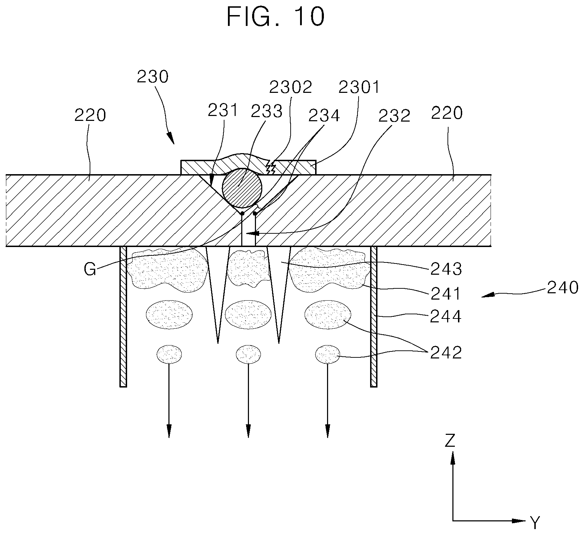

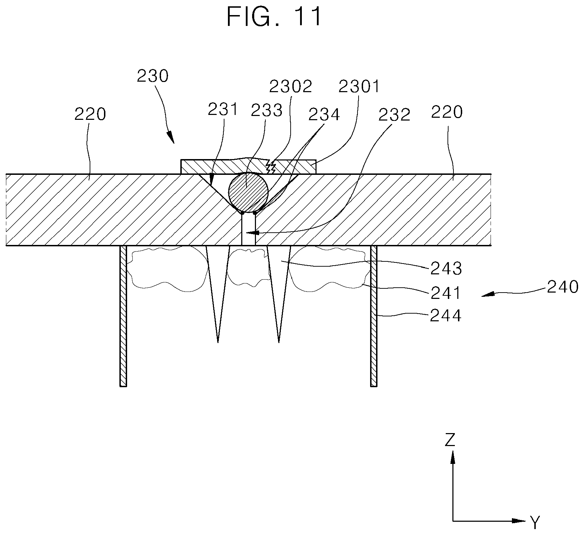

FIG. 8 is a schematic cross-sectional view illustrating the cap plate, the vent member, and the electrolyte accommodation member according to an embodiment of the present disclosure, FIG. 9 is a schematic cross-sectional view illustrating a process in which the electrolyte accommodation member moves, FIG. 10 is a schematic cross-sectional view illustrating a process in which the electrolyte accommodation member is ruptured, and FIG. 11 is a cross-sectional view illustrating a shape after the electrolyte accommodation member is ruptured.

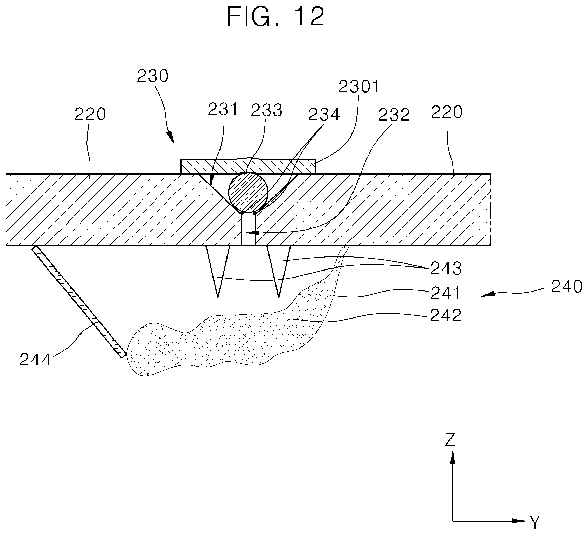

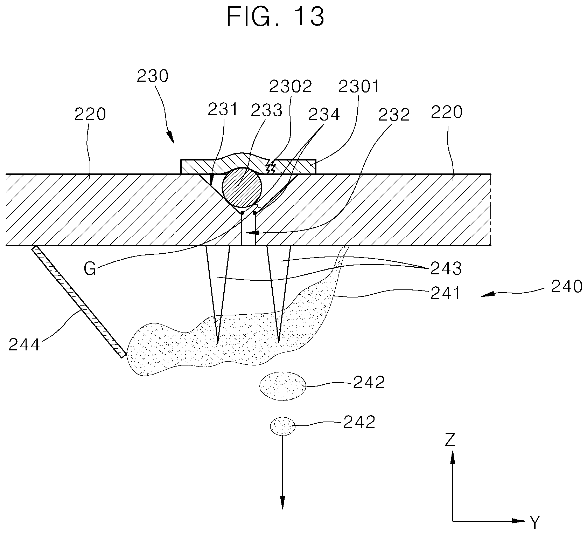

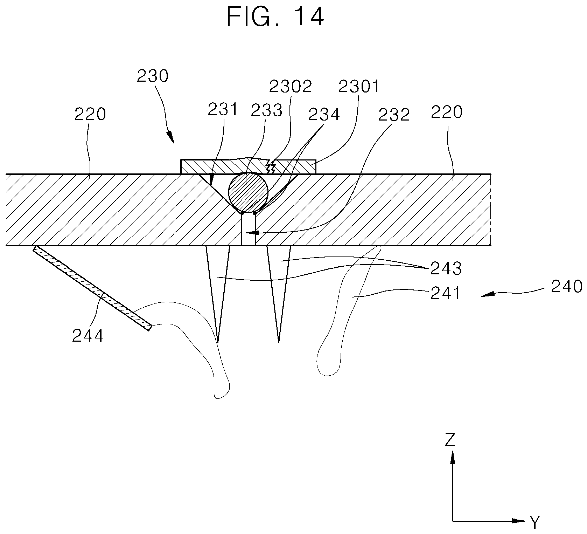

FIG. 12 is a schematic cross-sectional view illustrating the cap plate, the vent member, and the electrolyte accommodation member according to another embodiment of the present disclosure, FIG. 13 is a schematic cross-sectional view illustrating a process in which the electrolyte accommodation member moves, and FIG. 14 is a cross-sectional view illustrating a shape after the electrolyte accommodation member is ruptured;

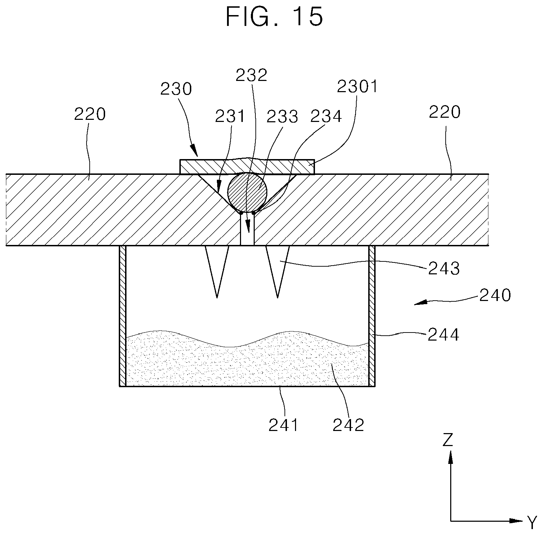

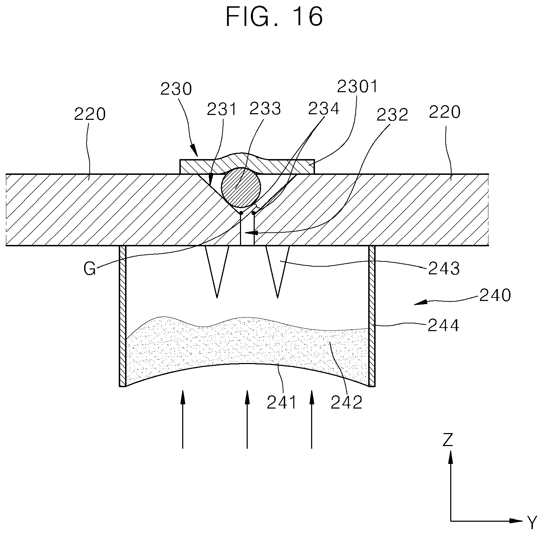

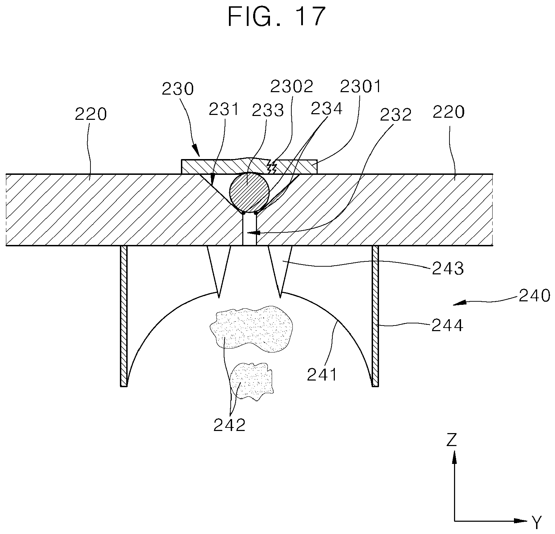

FIG. 15 is a schematic cross-sectional view illustrating the cap plate, the vent member, and the electrolyte accommodation member according to another embodiment of the present disclosure, FIG. 16 is a schematic cross-sectional view illustrating a process in which the electrolyte accommodation member moves, and FIG. 17 is a cross-sectional view illustrating a shape after the electrolyte accommodation member is ruptured.

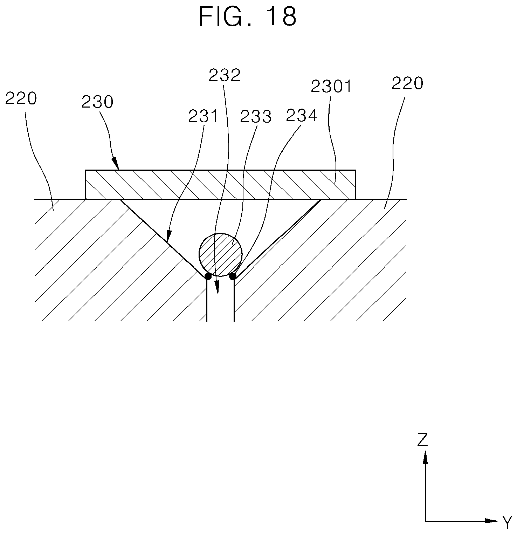

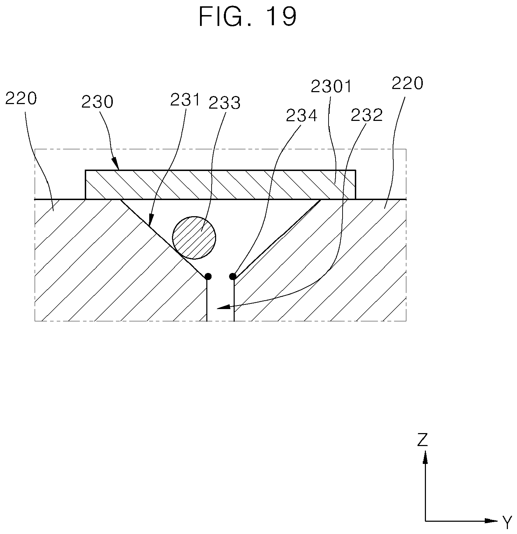

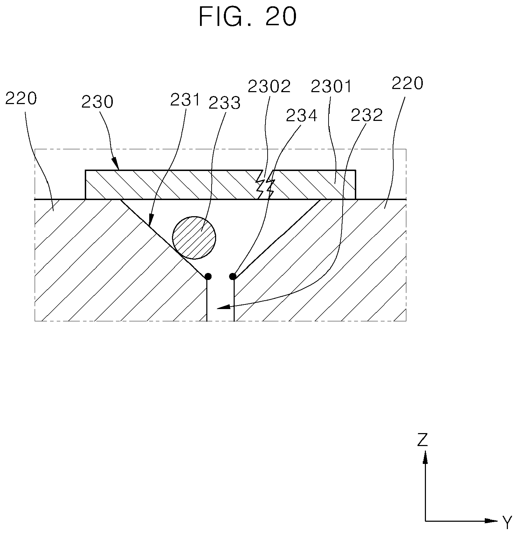

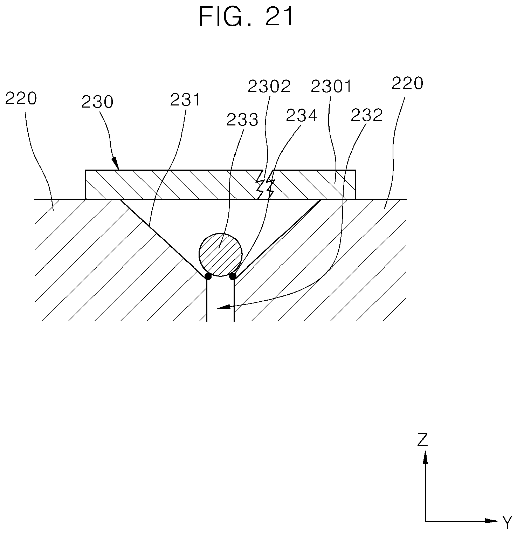

FIG. 18 is a schematic cross-sectional view illustrating the cap plate, the vent member, and the electrolyte accommodation member according to another embodiment of the present disclosure, FIG. 19 is a schematic cross-sectional view illustrating a process in which the electrolyte accommodation member moves, FIG. 20 is a schematic cross-sectional view illustrating a process in which the electrolyte accommodation member is ruptured, and FIG. 21 is a cross-sectional view illustrating a shape after the electrolyte accommodation member is ruptured.

Hereinafter, common components in FIGS. 8 to 21 will be described.

The inside and outside of the battery cell 200 may communicate with each other through the vent member 230. The vent member 230 may be formed to pass through the cap plate 220.

The vent member 230 may include the blocking member 2301, the inclined vent portion 231, and the vent hole 232.

The blocking member 2301 may be disposed on the vent member 230 (for example, in the +Z-axis direction).

According to an example, the blocking member 2301 may be formed as a membrane. According to another example, the blocking member 2301 may be formed as a mesh membrane. Accordingly, the outside of the battery cell 200 and the vent member 230 may communicate with each other.

The blocking member 2301 may be disposed in contact with the sealing member 233. The blocking member 2301 may be in contact with the sealing member 233 to press the sealing member 233 in a direction (for example, in the -Z-axis direction). Accordingly, even when an external force acts on the sealing member 233, movement of the sealing member 233 is restricted, or even when the sealing member 233 moves, the sealing member 233 may move to be disposed on the vent gasket 234 when the external force is removed. Alternatively, when the external force is removed, the sealing member 233 may move to be disposed in the vent gasket 234 by the weight thereof.

As the blocking member 2301 is disposed on the vent member 230, the outside of the battery cell 200 may be blocked from the vent member 230. Accordingly, a pressure difference between the outside of the battery cell 200 and the vent member 230 may occur. The blocking member 2301 may be ruptured by an external impact. According to an example, the blocking member 2301 may be ruptured by a pressure difference between an inner portion (for example, the vent member 230) of the cap plate 220 and the outside. A magnitude of a pressure value (for example, the second pressure value) at which the blocking member 2301 is ruptured may be greater than a magnitude of a pressure value (for example, the first pressure value) at which the electrolyte accommodation member 240 is ruptured. Alternatively, a magnitude of a pressure value (for example, the first pressure value) at which the electrolyte accommodation member 240 is ruptured may be greater than or equal to a magnitude of a pressure value (for example, the second pressure value) at which the blocking member 2301 is ruptured.

When a magnitude of a pressure value (for example, the second pressure value) at which the blocking member 2301 is ruptured is greater than a magnitude of a pressure value (for example, the first pressure value) at which the electrolyte accommodation member 240 is ruptured, the electrolyte accommodation member 240 may be ruptured before the blocking member 2301 is ruptured. The electrolyte accommodation member 240 may be ruptured by a pressure difference, or by a protrusion 243 at a certain pressure (e.g., a predetermined pressure) (for example, the first pressure value). When the blocking member 2301 is ruptured, the ruptured hole 2302 may be formed in the blocking member 2301. The pressure difference between the vent member 230 and the outside of the battery cell 200 may be reduced or removed through the ruptured hole 2302 of the blocking member 2301. Even when the ruptured hole 2302 is formed in the blocking member 2301, the sealing member 233 may move to be disposed on the vent gasket 234 by the elastic force of the blocking member 2301 in contact with the sealing member 233. Alternatively, the sealing member 233 may move to be disposed on the vent gasket 234 by the weight of the sealing member 233.

The inclined vent portion 231 may be disposed at a side of the cap plate 220, and the vent hole 232 may be disposed at another side of the cap plate 220. According to an example, the inclined vent portion 231 may be disposed at an upper side of the cap plate 220 (for example, in the +Z-axis direction), and the vent hole 232 may be disposed at a lower side of the cap plate 220 (for example, in the -Z-axis direction). The inclined vent portion 231 and the vent hole 232 may communicate with each other, and thus, the upper side and the lower side of the cap plate 220 may communicate with each other.

The inclined vent portion 231 may be formed to be inclined at an angle (e.g., a predetermined angle) with respect to a surface (for example, an X-Y plane) of the cap plate 220. Accordingly, a size of the inclined vent portion 231 in the surface of the cap plate 220 may be greater than a size of the vent hole 232. According to an example, each of cross-sectional shapes of the inclined vent portion 231 and the vent hole 232 parallel to the surface (for example, the X-Y plane) of the cap plate 220 may be a circular shape, and a diameter of a cross-section of the inclined vent portion 231 may be greater than or equal to a diameter of a cross-section of the vent hole 232.

The sealing member 233 may be disposed on the vent member 230. The sealing member 233 may be disposed between the inclined vent portion 231 and the vent hole 232 to allow the inclined vent portion 231 to communicate with or be blocked from the vent hole 232. Since the sealing member 233 allows the inclined vent portion 231 to communicate with the vent hole 232, a pressure difference between the inclined vent portion 231 and the vent hole 232 may be reduced or removed, and since the inclined vent portion 231 is blocked from the vent hole 232, the pressure difference between the inclined vent portion 231 and the vent hole 232 may occur. When an external force is applied to the sealing member 233 disposed to block communication between the inclined vent portion 231 and the vent hole 232, the sealing member 233 may move to allow the inclined vent portion 231 to communicate with the vent hole 232. When the inclined vent portion 231 communicates with the vent hole 232 to remove the pressure difference between the inclined vent portion 231 and the vent hole 232, the sealing member 233 may move to be disposed on the vent gasket 234 by the weight of the sealing member 233 or by the elastic force of the blocking member 2301 in contact with the sealing member 233. Since the sealing member 233 moves to be disposed on the vent gasket 234, communication between the inclined vent portion 231 and the vent hole 232 may be blocked.

The vent gasket 234 may be disposed between the inclined vent portion 231 and the vent hole 232. The vent gasket 234 may be formed of an elastic material. According to an example, the vent gasket 234 may be formed of rubber. The sealing member 233 may be disposed on the vent gasket 234 (for example, in the +Z-axis direction). The sealing member 233 may be formed in a spherical shape. The sealing member 233 may be disposed on a lowermost end of the inclined vent portion 231 (for example, in the -Z-axis direction) by the weight of the sealing member 233. Alternatively, as the blocking member 2301 in contact with the sealing member 233 presses the sealing member 233 in a direction (for example, in the - Z-axis direction) so that the sealing member 233 is disposed on the lowermost end of the inclined vent portion, the inclined vent portion 231 may be blocked from the vent hole 232 by the sealing member 233 and the vent gasket 234, and thus a pressure difference between the inclined vent portion 231 and the vent hole 232 may occur.

When a pressure difference between the inclined vent portion 231 and the vent hole 232 occurs and the pressure difference greater than the weight of the sealing member 233 acts on the sealing member 233, the sealing member 233 may move. Alternatively, when a pressure difference that occurs between the inclined vent portion 231 and the vent hole 232 is greater than a sum of the weight of the sealing member 233 and the elastic force of the blocking member 2301 in contact with the sealing member 233, the sealing member 233 may move. Accordingly, the inclined vent portion 231 communicates with the vent hole 232, and a pressure between the inclined vent portion 231 and the vent hole 232 may be adjusted. When the pressure between the inclined vent portion 231 and the vent hole 232 is adjusted according to the movement of the sealing member 233, the sealing member 233 may be disposed on the lowermost end of the inclined vent portion 231 (for example, the vent gasket 234). As the sealing member 233 is disposed on the lowermost end of the inclined vent portion 231, even when the blocking member 2301 formed as the mesh membrane or the membrane is ruptured, foreign matter can be prevented from being introduced into the vent hole 232.

The electrolyte accommodation member 240 may be disposed under the cap plate 220 (for example, in the -Z-axis direction). The electrolyte accommodation member 240 may include the electrolyte accommodation membrane 241, the electrolyte 242 accommodated in the electrolyte accommodation membrane 241, the protrusion 243, and the guide member 244.

The electrolyte accommodation membrane 241 may be formed in the form of a pouch or membrane. In FIGS. 8 to 14, an example of the electrolyte accommodation membrane 241 is formed in the form of the pouch or membrane, and in FIGS. 15 to 17, an example of the electrolyte accommodation membrane 241 is formed in the form of a membrane. A predetermined pressure value of the electrolyte accommodation membrane 241 (for example, the first pressure value) may be experimentally determined and may be smaller than a predetermined pressure value (for example, the second pressure value) at which the blocking member 2301 is ruptured.

The electrolyte 242 may be accommodated in the electrolyte accommodation membrane 241 formed in the form of the pouch (for example, an electrolyte pouch) and disposed adjacent to the cap plate 220. A capacity for the electrolyte 242 accommodated in the electrolyte accommodation membrane 241 may be in the range of about 3 cc to 20 cc. When the electrolyte accommodation membrane 241 is ruptured, the electrolyte 242 may fall, and the electrolyte may be replenished in the battery cell 200.

The guide member 244 may be disposed under the cap plate 220 (for example, in the -Z-axis direction).

According to an example, the guide member 244 may be formed in a column shape with two open sides. A shape of a cross sectional of a column in a direction perpendicular to a longitudinal direction may vary. According to an example, the shape of the cross-section of the column in the direction perpendicular to the longitudinal direction may be a quadrangular or circular shape.

According to an example, the guide member 244 may be implemented in the form of a rod or plate. An end side of the guide member 244 may be fixed to the cap plate 220, and another side thereof may be connected to the electrolyte accommodation membrane 241.

The guide member 244 may be in contact with the electrolyte accommodation membrane 241 and may block the vent hole 232 from an inner portion of the battery cell 200. As the vent hole 232 is blocked from the inner portion of the battery cell 200, a pressure difference between the vent hole 232 and the inner portion of the battery cell 200 may occur.

When an internal pressure of the battery cell 200 increases, the electrolyte accommodation membrane 241 may move toward the cap plate 220 due to a pressure difference between the vent hole 232 and the inner portion of the battery cell 200. According to an example, when an internal pressure of the battery cell 200 is greater than a certain pressure (e.g., a preset value), the electrolyte accommodation membrane 241 may move toward the cap plate 220. The electrolyte accommodation membrane 241 may be guided to move toward the cap plate 220 by the guide member 244.

The electrolyte accommodation membrane 241 may be ruptured at a certain pressure (e.g., a preset pressure value) (for example, the first pressure value), and thus the electrolyte 242 accommodated in the electrolyte accommodation membrane 241 may fall. Accordingly, the electrolyte 242 can be automatically replenished in the battery cell 200.

As the electrolyte accommodation membrane 241 is ruptured, the internal pressure of the battery cell 200 is directly transferred to the sealing member 233, and when a pressure greater than the weight of the sealing member 233 acts on the sealing member 233, the sealing member 233 may move. Alternatively, when a pressure greater than a sum of the weight of the sealing member 233 and the elastic force of the blocking member 2301 in contact with the sealing member 233 acts on the sealing member 233, the sealing member 233 may move.

As the sealing member 233 moves, the inclined vent portion 231 may communicate with the inner portion of the battery cell 200, and the internal pressure of the battery cell 200 may be directly transferred to the blocking member 2301, and when a pressure greater than a pressure corresponding to a breaking strength of the blocking member 2301 acts on the blocking member 2301, the blocking member 2301 may be ruptured, and the ruptured hole 2302 may be formed in the blocking member 2301. Alternatively, the blocking member 2301 formed as the mesh membrane may discharge an internal gas to the outside of the battery cell 200. Accordingly, the internal pressure of the battery cell 200 may be adjusted (for example, decreased) to prevent a swelling phenomenon or explosion of the battery cell 200.

Components illustrated in FIGS. 8 to 11 may be the same as or similar to those illustrated in FIGS. 1 to 7. Accordingly, descriptions of the same components may be omitted.

Referring to FIGS. 8 to 11, the vent member 230 and the electrolyte accommodation member 240 may be disposed in the cap plate 220.

The electrolyte accommodation member 240 may be disposed under the vent member 230 (for example, in the -Z-axis direction). The electrolyte accommodation member 240 may include the electrolyte accommodation membrane 241 in which the electrolyte 242 is accommodated, the protrusion 243, and the guide member 244.

The electrolyte accommodation membrane 241 may be attached to a lower surface of the cap plate 220 using an adhesive or the like. Alternatively, the electrolyte accommodation membrane 241 may be supported by the guide member 244. The guide member 244 may guide movement of the electrolyte accommodation membrane 241. Communication between the vent member 230 and the inner portion of the battery cell 200 may be blocked by the guide member 244 and the electrolyte accommodation membrane 241. The electrolyte accommodation membrane 241 may move according to a pressure difference between the vent member 230 and the inner portion of the battery cell 200.

The electrolyte accommodation membrane 241 may be formed of an elastic material and may block the vent member 230 from the inner portion of the battery cell 200 so that the vent member 230 does not communicate with the inner portion of the battery cell 200. The vent member 230 may be blocked from the inner portion of the battery cell 200 by the electrolyte accommodation membrane 241, and the vent member 230 may be blocked from the inner portion of the battery cell 200 by the electrolyte accommodation membrane 241 and the guide member 244.

As an internal pressure of the battery cell 200 increases, the electrolyte accommodation membrane 241 may move toward the cap plate 220 (see FIG. 9). When the internal pressure of the battery cell 200 is greater than a certain pressure (e.g., a predetermined value) (for example, the first pressure value), the electrolyte accommodation membrane 241 may be ruptured by the internal pressure of the battery cell 200, or may move toward the cap plate 220, may come into contact with the protrusion 243 disposed under the cap plate 220, and may be ruptured by the protrusion 243 (see FIG. 10).

The vent member 230 may include the blocking member 2301. The blocking member 2301 formed as the membrane may be ruptured at a certain pressure (e.g., a predetermined pressure) (for example, the second pressure value). When the blocking member 2301 is ruptured, the ruptured hole 2302 may be formed in the blocking member 2301, and a size of the ruptured hole 2302 may be smaller than a size of the sealing member 233 disposed in the vent member 230. According to another example, the blocking member 2301 may be formed of the mesh membrane.

The sealing member 233 may move according to a pressure difference between the inclined vent portion 231 of the vent member 230 and the vent hole 232. When the pressure difference between the inclined vent portion 231 and the vent hole 232 is greater than the weight of the sealing member 233 or than the sum of the weight of the sealing member 233 and the elastic force of the blocking member 2301 in contact with the sealing member 233, the sealing member 233 may move to be separated from the vent gasket 234, and the pressure difference between the inclined vent portion 231 and the vent hole 232 may be reduced or removed. When the pressure difference between the inclined vent portion 231 and the vent hole 232 becomes smaller than the weight of the sealing member 233 or than the sum of the weight of the sealing member 233 and the elastic force of the blocking member 2301 in contact with the sealing member 233, the sealing member 233 may move to come into contact with the vent gasket 234.

When the electrolyte accommodation membrane 241 is ruptured, the electrolyte 242 accommodated in the electrolyte accommodation membrane 241 may be discharged to the outside of the electrolyte accommodation membrane 241 (see FIG. 10). The electrolyte 242 discharged to the outside of the electrolyte accommodation membrane 241 may fall into the battery cell 200.

After the electrolyte accommodation membrane 241 is ruptured, the electrolyte accommodation membrane 241 may be disposed under the cap plate 220, the sealing member 233 may be seated on the vent gasket 234, and thus the inside and outside of the battery cell 200 may be blocked from each other. Accordingly, foreign matter can be prevented from being introduced into the battery cell 200.

Components illustrated in FIGS. 12 to 14 may be the same as or similar to those illustrated in FIGS. 1 to 11. Accordingly, descriptions of the same components may be omitted.

Referring to FIGS. 12 to 14, the vent member 230 may be blocked from the inner portion of the battery cell 200 by the guide member 244 and the electrolyte accommodation membrane 241 (see FIG. 12). Accordingly, a pressure difference between the vent member 230 and the inner portion of the battery cell 200 may occur, and the electrolyte accommodation membrane 241 may move according to the pressure difference.

When an internal pressure of the battery cell 200 increases, the electrolyte accommodation membrane 241 may move toward the cap plate 220. As the electrolyte accommodation membrane 241 moves toward the cap plate 220, the electrolyte accommodation membrane 241 may come into contact with the protrusion 243 disposed under the cap plate 220, and thus the electrolyte accommodation membrane 241 may be ruptured. As the electrolyte accommodation membrane 241 is ruptured, the electrolyte 242 accommodated in the electrolyte accommodation membrane 241 may be discharged to the inner portion of the battery cell 200. The electrolyte 242 discharged from the electrolyte accommodation membrane 241 may fall (see FIG. 13).

After the electrolyte accommodation membrane 241 is ruptured and the electrolyte 242 is discharged, the sealing member 233 may be disposed to block the inclined vent portion 231 from the vent hole 232. The sealing member 233 may be disposed to be seated on the vent gasket 234 (see FIG. 14).

Components illustrated in FIGS. 15 to 17 may be the same as or similar to those illustrated in FIGS. 1 to 11. Accordingly, descriptions of the same components may be omitted.

Referring to FIGS. 15 to 17, the electrolyte accommodation membrane 241 may be disposed to block an opening of the guide member 244. The electrolyte 242 may be accommodated in a space surrounded by the electrolyte accommodation membrane 241 and the guide member 244. The protrusion 243 may be disposed under the cap plate 220. The protrusion 243 may be disposed in a space surrounded by the cap plate 220 and the guide member 244 (see FIG. 15).

A part of the electrolyte accommodation membrane 241 connected to the guide member 244 may be fixed, and a part thereof which is not connected thereto may be elastically deformed. When an internal pressure of the battery cell 200 increases, the electrolyte accommodation membrane 241 may move toward the cap plate 220 (see FIG. 16). While the electrolyte accommodation membrane 241 moves toward the cap plate 220, the electrolyte accommodation membrane 241 may be deformed.

As the electrolyte accommodation membrane 241 is deformed, the sealing member 233 may move, and an internal pressure of the vent member 230 may change. While the internal pressure of the battery cell 200 increases, the electrolyte accommodation membrane 241 may be deformed, and when the internal pressure of the battery cell 200 increases to be greater than a pressure corresponding to a breaking strength of the electrolyte accommodation membrane 241, the electrolyte accommodation membrane 241 may be ruptured. Alternatively, the electrolyte accommodation membrane 241 and the protrusion 243 come into contact with each other, and thus the electrolyte accommodation membrane 241 may be ruptured (see FIG. 17). When the electrolyte accommodation membrane 241 is ruptured, the electrolyte 242 may be discharged from the electrolyte accommodation membrane 241. The electrolyte 242 discharged from the electrolyte accommodation membrane 241 may fall into the battery cell 200.

Referring to FIGS. 18 to 21, a vent region R (see FIG. 8) that is an enlarged portion in which a cap plate 220, a vent member 230, a blocking member 2031, and a ruptured hole 2302 are disposed may be shown. The vent member 230 may include the blocking member 2301. It can be seen that a sealing member 233 disposed on a vent gasket 234 is formed to be spaced apart from the blocking member 2301.

According to an example, the blocking member 2301 formed as a membrane may be ruptured at a certain pressure (e.g., a predetermined pressure) (for example, a second pressure value). When the blocking member 2301 is ruptured, the ruptured hole 2302 may be formed in the blocking member 2301, and a size of the ruptured hole 2302 may be smaller than a size of the sealing member 233 disposed in the vent member 230.

According to another example, the blocking member 2301 may be formed as a mesh membrane. As the blocking member 2301 is formed as the mesh membrane, an inner portion of a battery cell 200 and the outside of the battery cell 200 may communicate with each other through the blocking member 2301.

The sealing member 233 may be disposed to block communication between the inclined vent portion 231 of the vent member 230 and the vent hole 232 (see FIG. 18). The sealing member 233 may be disposed on the vent gasket 234 disposed between the inclined vent portion 231 and the vent hole 232 to block communication between the inclined vent portion 231 and the vent hole 232. The sealing member 233 may be prevented from escaping from the vent member 230 by the blocking member 2301.

The sealing member 233 may move according to a pressure difference between the inclined vent portion 231 of the vent member 230 and the vent hole 232 (see FIG. 19). When the pressure difference between the inclined vent portion 231 and the vent hole 232 is greater than a weight of the sealing member 233, the sealing member 233 may move to be separated from the vent gasket 234, and thus the pressure difference between the inclined vent portion 231 and the vent hole 232 may be reduced or removed. When the pressure difference between the inclined vent portion 231 and the vent hole 232 becomes smaller than the weight of the sealing member 233, the sealing member 233 may move to come into contact with the vent gasket 234.

According to an example, when a pressure acting on the inclined vent portion 231 is greater than a pressure corresponding to a breaking strength of the blocking member 2301, the blocking member 2301 formed as the membrane may be ruptured (see FIG. 20). According to another example, the blocking member 2301 formed as the mesh membrane may be formed to allow a gas to pass through the blocking member 2301 to reduce a pressure acting on the inclined vent portion 231. Accordingly, the sealing member 233 may not escape to the outside of the battery cell 200, and the gas in the battery cell 200 may be discharged to the outside of the battery cell 200 to reduce an internal pressure of the battery cell 200.

As the internal pressure of the battery cell 200 decreases, the sealing member 233 may move to come into contact with the vent gasket 234 by the weight thereof. As the sealing member 233 moves to come into contact with the vent gasket 234, communication between the inclined vent portion 231 and the vent hole 232 may be blocked. Accordingly, foreign matter can be prevented from being introduced into the battery cell 200, the internal pressure of the battery cell 200 can be prevented from increasing to a value greater than or equal to a predetermined value, and thus a swelling phenomenon of the battery cell 200 can be prevented and a durability of the battery cell 200 can be improved.

Using such a configuration, while the battery cell 200 is used, the electrolyte can be automatically replenished in the battery cell 200, and the internal pressure of the battery cell 200 can be adjusted. Accordingly, a use time of the battery cell 200 can increase, and safety of the battery cell 200 can be improved.

According to the present disclosure, since an electrolyte is automatically replenished in a battery cell, and a lifetime of the battery cell can be extended.

According to the present disclosure, since a gas in a battery cell can be discharged to the outside of the battery cell, and the safety of the battery cell can be improved.

However, aspects and effects obtainable through the present disclosure are not limited to the above aspects and effects, and other technical effects that are not mentioned will be clearly understood by those skilled in the art from the following description of the present disclosure.

Although the present disclosure has been described above with reference to limited specific embodiments and drawings, the present disclosure is not limited thereto, and various modifications and changes may be made by those skilled in the art within the scope of the present disclosure as defined by the appended claims and equivalents thereto.

## Claims

1. A battery cell (200) comprising:
a case (210) which accommodates an electrode assembly (10);
a cap plate (220) which is disposed on the case (210) and seals the case (210);
a vent member (230) which is provided in the cap plate (220) and communicates with an inside of the case (210); and
an electrolyte accommodation member (240) which is disposed in the case (210), communicates with the vent member (230), accommodates an electrolyte (242), and is configured to be ruptured when an internal pressure of the case (210) is greater than a first pressure value.

2. The battery cell (200) as claimed in claim 1, further comprising a blocking member (2031, 2301) seated on the cap plate (220) and disposed to cover the vent member (230).

3. The battery cell (200) as claimed in claim 2, wherein, when the internal pressure of the case (210) is greater than a second pressure value, the blocking member (2031, 2301) is configured to be ruptured so that a ruptured hole (2302) is formed in the blocking member (2031, 2301).

4. The battery cell (200) as claimed in claim 3, wherein the second pressure value is greater than the first pressure value.

5. The battery cell (200) as claimed in any one of claims 2 to 4, comprising a sealing member (233) which is disposed in the vent member (230) and configured to move to allow communication between the vent member (230) and the inside of the case (210) by an increase of the internal pressure of the case (210).

6. The battery cell (200) as claimed in claim 5, wherein the blocking member (2031, 2301) is disposed in contact with the sealing member (233) to press the sealing member (233) toward the inside of the case (210).

7. The battery cell (200) as claimed in claim 5 or 6, wherein the vent member (230) includes:
a vent hole (232) which is formed in a lower surface of the cap plate (220), communicates with the inside of the case (210), and has a first diameter; and
an inclined vent portion (231) which is disposed in an upper surface of the cap plate (220), has a second diameter greater than the first diameter, and is obliquely formed toward the vent hole (232).

8. The battery cell (200) as claimed in claim 7, wherein the vent member (230) includes a vent gasket (234) which is disposed between the vent hole (232) and the inclined vent portion (231) and on which the sealing member (233) is seated.

9. The battery cell (200) as claimed in claim 7 or 8, wherein the sealing member (233):
allows the vent hole (232) to communicate with the inclined vent portion (231) when a difference between an internal pressure of the vent hole (232) and an internal pressure of the inclined vent portion (231) is greater than a predetermined value; and
blocks the vent hole (232) from the inclined vent portion (231) when the difference between the internal pressure of the vent hole (232) and the internal pressure of the inclined vent portion (231) is smaller than or equal to the predetermined value.

10. The battery cell (200) as claimed in any one of claims 5 to 9, wherein a shape of the sealing member (233) is a spherical shape.

11. The battery cell (200) as claimed in any one of the preceding claims, wherein the electrolyte accommodation member (240) is disposed to block the inside of the case (210) from the vent member (230).

12. The battery cell (200) as claimed in any one of the preceding claims, wherein the electrolyte accommodation member (240) includes an electrolyte accommodation membrane (241) which is in contact with the electrolyte (242) and configured to move toward the cap plate (220) when the internal pressure of the case (210) is greater than atmospheric pressure.

13. The battery cell (200) as claimed in claim 12, wherein the electrolyte accommodation member (240) includes a protrusion (243) which is configured to rupture the electrolyte accommodation membrane (241) which moves according to the internal pressure of the case (210).

14. The battery cell (200) as claimed in claim 13, wherein the protrusion (243) is disposed on a lower surface of the cap plate (220), formed as a sting protruding toward the electrolyte accommodation membrane (241), and configured to rupture the moving electrolyte accommodation membrane (241) so that the electrolyte (242) accommodated in the electrolyte accommodation membrane (241) falls.

15. A battery module comprising:
a housing (100); and
a plurality of battery cells (200) disposed in the housing (100),
wherein the battery cell (200) includes a case (210) which accommodates an electrode assembly (10), a cap plate (220) which is disposed on the case (210) and seals the case (210), a vent member (230) which is provided in the cap plate (220) and communicates with an inside of the case (210), and an electrolyte accommodation member (240) which is disposed in the case (210), communicates with the vent member (230), accommodates an electrolyte (242), and is configured to be ruptured when an internal pressure of the case (210) is greater than a first pressure value.
